(19) **Europäisches Patentamt / European Patent Office / Office européen des brevets**

(11) **EP 4 166 353 B1**

(12) **EUROPEAN PATENT SPECIFICATION**

(45) Date of publication and mention
of the grant of the patent:
**23.07.2025 Bulletin 2025/30**

(21) Application number: **22199922.0**

(22) Date of filing: **06.10.2022**

(51) International Patent Classification (IPC):
***B60C 1/00*** *(2006.01)*    ***C08L 9/00*** *(2006.01)*

(52) Cooperative Patent Classification (CPC):
(C-Sets available)
**C08L 9/00; B60C 3/04;** B60C 2001/005;
Y02T 10/86    (Cont.)

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.10.2021   JP 2021170310
20.06.2022   JP 2022098992**

(43) Date of publication of application:
**19.04.2023   Bulletin 2023/16**

(73) Proprietor: **Sumitomo Rubber Industries, Ltd.
Kobe-shi, Hyogo 651-0072 (JP)**

(72) Inventors:
• **FUJII, Daichi
Kobe-shi, Hyogo, 651-0072 (JP)**
• **HAMAMURA, Kenji
Kobe-shi, Hyogo, 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-A1- 3 257 894     EP-A1- 3 336 136
EP-A2- 2 799 247**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 9/00, C08L 7/00, C08L 9/06, C08K 3/04;**
**C08L 9/00, C08L 9/00, C08L 9/06, C08K 3/04;**

**C08L 9/00, C08L 9/06, C08L 7/00, C08K 3/04;**
**C08L 9/00, C08L 9/06, C08L 7/00, C08K 3/04,**
**C08K 3/36;**
**C08L 9/00, C08L 15/00, C08L 7/00, C08K 3/04,**
**C08K 3/36**

**Description**

TECHNICAL FIELD

The present invention relates to a tire.

BACKGROUND OF THE INVENTION

In a growing demand for improvement in life performance of a tire, it is necessary to extend lives of not only a tread part but also members other than the tread part such as a clinch part and a chafer part. In particular, the clinch part is a tire member which is susceptible to repeated deformation and easily generates cracks when deteriorated.
WO 2020/058150 describes a tire comprising a clinch apex of a predetermined rubber composition for clinch apex and having improved low heat generation and high-speed durability.

SUMMARY OF THE INVENTION

An object of the present invention is to provide a tire having improved crack resistance of a clinch part.
As a result of intensive studies, it has been found that the above-described problem can be solved by setting a total styrene amount in a rubber component of a clinch part and a maximum thickness of the clinch part in a predetermined relationship.
That is, the present invention relates to a tire comprising a clinch part, wherein the clinch part is composed of a rubber composition comprising a rubber component and a filler, wherein the rubber component comprises an isoprene-based rubber and a styrene-butadiene rubber, and wherein, when a total styrene amount in the rubber component is defined as S (% by mass) and a maximum thickness of the clinch part is defined as T (mm), S is 1.0 to 15.0% by mass, and S/T is 0.10 or more.
According to the present invention, provided is a tire having improved crack resistance of a clinch part.

BRIEF DESCRIPTION OF THE DRAWINGS

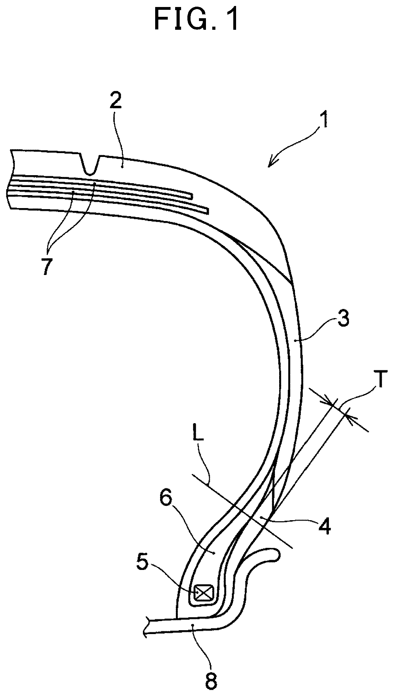

FIG. 1 is a schematic partial cross-sectional view of the tire according to one embodiment of the present invention.

DETAILED DESCRIPTION

The tire that is one embodiment of the present invention is a tire comprising a clinch part, wherein the clinch part is composed of a rubber composition comprising a rubber component and a filler, wherein the rubber component comprises an isoprene-based rubber and a styrene-butadiene rubber (SBR), and wherein, when a total styrene amount in the rubber component is defined as S (% by mass) and a maximum thickness of the clinch part is defined as T (mm), S is 1.0 to 15.0% by mass, and S/T is 0.10 or more.
When the total styrene amount in the rubber component of the clinch part and the maximum thickness of the clinch part satisfy the above-described requirements, the crack resistance of the clinch part of the tire obtained is remarkably improved. The reason for that is not intended to be bound by theory, but is considered as follows.
The clinch part is susceptible to repeated deformation and easily generates cracks when deteriorated. The tire of the present invention has features that: (1) when an isoprene-based rubber and a SBR are compounded as rubber components of the clinch part, they become in an incompatible state, and at that time, by setting the total styrene amount in the rubber component within a predetermined range, a domain in which styrene in the SBR are aggregated is formed, and the domain can relax stress at the time of clinch deformation; (2) SBR has an excellent ozone resistance since it has styrene part; and (3) by increasing the total styrene amount in the rubber component based on the thickness of the clinch part, the stress can be easily relaxed at a styrene domain part even when the clinch part is thick and in a state where impact at the time of rolling of the tire is easily transmitted, so that the impact can be easily absorbed inside. In addition, with cooperation of these features, the tire has an excellent ozone resistance and becomes in a state where the styrene domain easily relaxes the stress even against the deformation, so that it is considered that a remarkable effect of significantly improving the crack resistance of the clinch part.
When a tire weight is defined as G (kg) and a maximum load capacity of the tire is defined as $W_L$ (kg), $G/W_L$ is preferably 0.0150 or less.
By setting $G/W_L$ within the above-described range and reducing the tire weight with respect to the maximum load capacity of the tire, influence by the tire weight is reduced even in a state where a load due to loading or riding is applied, and the deformation of the clinch part can be reduced, so that it is considered that occurrence of cracks can be easily suppressed.

The rubber composition preferably comprises 5 to 35 parts by mass or more of silica having an average primary particle size of 18 nm or more based on 100 parts by mass of the rubber component. Moreover, the rubber composition preferably comprises 35 parts by mass or more of carbon black having an average primary particle size of 40 nm or more based on 100 parts by mass of the rubber component.

When the rubber composition comprises fillers each having a predetermined average primary particle size, rubber molecules bound by these fillers are minimized and become easy to flexibly move, so that it is considered that stress can be relaxed even in a polymer molecular chain against an input, and occurrence of cracks can be suppressed.

The rubber component preferably comprises 10 to 50% by mass of an isoprene-based rubber. Moreover, the rubber component preferably comprises 5 to 40% by mass of a SBR.

When the rubber component comprises an isoprene-based rubber and a SBR, for example, in the above-described ratios, it is considered that compatibility between the isoprene-based rubber and the SBR can be improved, a phase-separated structure can be formed, and stress can be easily relaxed between each phase.

When a tan $\delta$ at 70°C of the rubber composition is defined as 70°C tan $\delta$ and a complex elastic modulus at 70°C of the rubber composition is defined as 70°C E* (MPa), 70°C tan $\delta$/70°C E* is preferably 0.015 or less.

When 70°C tan $\delta$/70°C E* is within the above-described range, heat generation at the time of rolling of the tire can be suppressed, and it is considered that, as a result, deterioration of the tire can be effectively suppressed.

<Definition>

The "maximum thickness of the clinch part" is a maximum thickness T (mm) measured from an outer surface along a normal line L of an inner surface of a clinch part 4 in a tire axial direction. The "maximum thickness of the clinch part" is measured in a state where the tire is cut at a plane including a tire rotation axis and a width of a bead part is adjusted to a width of a standardized rim.

The "total styrene amount (S) in the rubber component" is a total content (% by mass) of styrene parts comprised in 100% by mass of the rubber component and is calculated by $\Sigma$ (styrene content of each styrene-containing rubber (% by mass)) $\times$ content in rubber component of each styrene-containing rubber (% by mass)/100). For example, when the rubber component is composed of 30% by mass of a first SBR (25% by mass of styrene content), 60% by mass of a second SBR (27.5% by mass of styrene content), and 10% by mass of a NR, a total styrene amount (S) in 100% by mass of the rubber component is 24.0% by mass (= 25 $\times$ 30/100 + 27.5 $\times$ 60/100).

The "tire weight" is expressed in G (kg). It is noted that G is a weight of a single tire not including a weight of a rim. Moreover, when a noise suppressing material, a sealant, a sensor, etc. are attached to a tire lumen, G is a value including these weights.

A "standardized rim" is a rim defined for each tire in a standard system including a standard, on which the tire is based, by the standard, i.e., a "standard rim" in JATMA, "Design Rim" in TRA, or "Measuring Rim" in ETRTO. Besides, if a size of the tire is not specified in the above-described standard system, the standardized rim is a rim which can be assembled to the tire and whose width is narrowest among rims having the smallest diameter that does not cause air leakage between the rim and the tire.

A "standardized internal pressure" is an air pressure defined for each tire in a standard system including a standard on, which the tire is based, by the standard, i.e., a "MAXIMUM AIR PRESSURE" in JATMA, a maximum value described in Table "TIRE LOAD LIMITS AT VARIOUS COLD INFLATION PRESSURES" in TRA, or "INFLATION PRESSURE" in ETRTO. Besides, if a size of the tire is not specified in the above-described standard system, the standardized internal pressure shall be 250 kPa.

A "standardized state" is a state where the tire is rim-assembled on a standardized rim, a standardized internal pressure is filled, and no load is applied. Besides, in a case of a tire having a size not specified in the above-described standard system, the standardized state is a state where the tire is rim-assembled on the minimum rim, 250 kPa is filled, and no load is applied.

The "tire weight G (kg)" is a weight of a single tire excluding a weight of a rim. Moreover, when a noise suppressing material, a sealant, a sensor, etc. are attached to a tire lumen, G is a value including these weights.

The "maximum load capacity $(W_L)$ (kg)" is a value calculated by the following equation (1) and (2) when a tire cross-sectional width measured in a standardized state is defined as Wt (mm), a tire cross-sectional height is defined as Ht (mm), and a tire outer diameter is defined as Dt (mm). V is a virtual volume of space occupied by a tire. The tire cross-sectional width Wt is a maximum width between outer surfaces of sidewalls excluding, if any, patterns or characters on the side surface of the tire in the above-described state. The tire cross-sectional height Ht is a distance from a bottom surface of a bead part to the outermost surface of a tread, which is half a difference between the outer diameter of the tire and a nominal size of a rim.

$$V = \{(Dt/2)^2 - (Dt/2 - Ht)^2\} \times \pi \times Wt \dots (1)$$

$$W_L = 0.000011 \times V + 100 \dots (2)$$

A "recycled carbon black" refers to a carbon black obtained from a pyrolysis process for a product such as a used tire comprising carbon black, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a mass (carbon amount) of a weight loss content due to the oxidative combustion is less than 87% by mass. The recycled carbon black is also referred to as a recycled carbon and may be represented by rCB.

An "oil content" also includes an amount of oil contained in the oil-extended rubber.

<Measuring method>

The "styrene content" is a value calculated by $^1$H-NMR measurement, and is applied to, for example, a rubber component having a repeating unit derived from styrene such as a SBR. A "cis content (cis-1,4-bond butadiene unit amount)" is a value calculated by infrared absorption spectrometry according to JIS K 6239-2: 2017, and is applied to, for example, a rubber component having a repeating unit derived from butadiene such as a BR.

The "average primary particle size of carbon black" can be calculated by observing carbon black with a transmission or scanning electron microscope, measuring 400 or more primary particles of carbon black observed in the field of view, and averaging them. A "$N_2SA$ of carbon black" is measured according to JIS K 6217-2:2017. The "average primary particle size of silica" can be calculated by observing silica with a transmission or scanning electron microscope, measuring 400 or more primary particles of silica observed in the field of view, and averaging them. A "CTAB (cetyltrimethylammonium bromide) specific surface area of silica" is measured according to ASTM D3765-92. A "$N_2SA$ of silica" is measured by the BET method according to ASTM D3037-93.

The "70°C tan $\delta$" is a loss tangent measured under a condition of a temperature at 70°C, a frequency of 10 Hz, and a dynamic strain amplitude of 1%. A sample for loss tangent measurement is a vulcanized rubber composition with 20 mm in length × 4 mm in width × 1 mm in thickness. When the sample is produced by being cut out from a tire, it is cut out from the clinch part 4 so that the tire circumferential direction becomes a long side and the tire width direction (a normal direction of the surface of the clinch part) becomes a thickness direction.

The "70°C E*" is a complex elastic modulus (MPa) measured under a condition of a temperature at 70°C, a frequency of 10 Hz, a dynamic strain amplitude of 1%. A sample for measuring the complex elastic modulus is produced in the same manner as in the case for the 70°C tan $\delta$.

A procedure for producing a tire that is one embodiment of the present invention will be described in detail below. However, the following descriptions are illustrative for explaining the present invention, and are not intended to limit the technical scope of the present invention to this description range only. Besides, in the present specification, a numerical range identified with "to" means to include the numerical values of both ends.

<Tire>

In the tire according to the present embodiment, $G/W_L$ is preferably 0.0180 or less, more preferably 0.0170 or less, further preferably 0.0160 or less, further preferably 0.0150 or less, further preferably 0.0140 or less, particularly preferably 0.0135 or less, from the viewpoint of effects of the present invention. On the other hand, a lower limit value of $G/W_L$ is not particularly limited, but can be, for example, 0.0080 or more, 0.0090 or more, 0.0100 or more, or 0.0110 or more. Besides, the tire weight G (kg) can be changed by a conventional method, that is, it can be increased by increasing the specific gravity of the tire or by increasing the thickness of each member of the tire, and it can be decreased by decreasing the specific gravity of the tire or by decreasing the thickness of each member of the tire.

The maximum load capacity $W_L$ (kg) is preferably 300 or more, more preferably 400 or more, further preferably 450 or more, particularly preferably 500 or more, from the viewpoint of better exhibiting the effects of the present invention. Moreover, the maximum load capacity $W_L$ (kg) can be, for example, 1300 or less, 1200 or less, 1100 or less, 1000 or less, 900 or less, 800 or less, 700 or less, or 650 or less, from the viewpoint of better exhibiting the effects of the present invention. Besides, the maximum load capacity $W_L$ can be increased by increasing the virtual volume V of the space occupied by the tire, and it can be decreased by decreasing the virtual volume V of the space occupied by the tire.

The maximum thickness T (mm) of the clinch part 4 is preferably 2.0 mm or more, more preferably 2.5 mm or more, further preferably 3.0 mm or more, further preferably 3.5 mm or more, particularly preferably 4.0 mm or more, from the viewpoint of the effects of the present invention. Moreover, the maximum thickness T (mm) of the clinch part 4 is preferably 10.0 mm or less, more preferably 8.0 mm or less, further preferably 7.0 mm or less, particularly preferably 6.0 mm or less, from the viewpoint of the effects of the present invention.

When a total styrene amount in the rubber component is defined as S (% by mass), S/T is 0.10 or more, preferably 0.20 or more, more preferably 0. 30 or more, further preferably 0.40 or more, particularly preferably 0.50 or more. When S/T is within the above-described ranges, the stress tends to be easily relaxed in the styrene domain part even when rigidity depending on the thickness of the clinch part is high. On the other hand, an upper limit value of S/T is, but not particularly limited to, preferably 3.50 or less, more preferably 3.00 or less, further preferably 2.50 or less, further preferably 2.00 or less, further preferably 1.75 or less, particularly preferably 1.50 or less.

[Rubber composition]

In the tire according to the present embodiment, the crack resistance of the clinch part can be improved more effectively by cooperation of the above-mentioned total styrene amount in the rubber component of the clinch part and the maximum thickness of the clinch part.

<Rubber component>

The rubber composition of the clinch part according to the present embodiment (hereinafter, referred to as the rubber composition according to the present embodiment) comprises an isoprene-based rubber and a styrene-butadiene rubber (SBR) as rubber components, preferably, further comprises a butadiene rubber (BR), and may further comprise other rubber components besides them. Moreover, the rubber component may be a rubber component consisting of an isoprene-based rubber, a SBR, and a BR.

(Isoprene-based rubber)

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is preferably 5% by mass or more, more preferably 10% by mass or more, further preferably 15% by mass or more, particularly preferably 20% by mass or more. On the other hand, the content of the isoprene-based rubber in the rubber component is preferably 50% by mass or less, more preferably 45% by mass or less, further preferably 40% by mass or less, particularly preferably 35% by mass or less. When the content of the isoprene-based rubber is within the above-described ranges, it is considered that the compatibility with the SBR can be improved, a phase-separated structure can be formed, and the stress can be easily relaxed between phases.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used. These SBRs may be used alone, or two or more thereof may be used in combination.

A hydrogenation rate of the hydrogenated SBR is preferably 30 mol% or more, more preferably 50 mol% or more, further preferably 60 mol% or more, further preferably 70 mol% or more, particularly preferably 80 mol% or more. On the other hand, an upper limit of the hydrogenation rate is not particularly limited and may be less than 100 mol%, but it is preferably 99 mol% or less, more preferably 98 mol% or less, further preferably 97 mol% or less. The hydrogenation rate can be adjusted by adjusting reaction conditions such as a hydrogen gas-supplying pressure and a reaction temperature in a hydrogenation reaction as described in Production example 1 which will be described later. Besides, the hydrogenation rate of the SBR refers to a ratio at which a double bond on a conjugated diene unit is hydrogenated, which can be calculated from a spectral reduction rate of an unsaturated bond part of a spectrum obtained by measuring $^{1}$H-NMR.

The hydrogenated SBR can be obtained not only from the method of hydrogenating the SBR but also from a copolymer of styrene and ethylene and/or butadiene synthesized by a known method. When the hydrogenated SBR is obtained by a method without hydrogenating the SBR, a structure, in which a vinyl bond of a butadiene part is hydrogenated, may not be present.

The styrene content of the SBR can be appropriately selected so that the total styrene amount in the rubber component satisfies ranges which will be described later, but it is preferably 40% by mass or less, more preferably 36% by mass or less, further preferably 32% by mass or less, particularly preferably 28% by mass or less. Moreover, the styrene content of the SBR is preferably 5% by mass or more, more preferably 7% by mass or more, further preferably 10% by mass or more, further preferably 13% by mass or more, particularly preferably 16% by mass or more. Besides, the styrene content of the SBR is measured by the above-described measuring method.

The content of the SBR in the rubber component can be appropriately selected so that the total styrene amount in the rubber component satisfies ranges which will be described later, but it is preferably 3% by mass or more, more preferably 5% by mass or more, further preferably 7% by mass or more, particularly preferably 10% by mass or more. On the other hand, the content of the SBR in the rubber component is preferably 50% by mass or less, more preferably 45% by mass or less, further preferably 40% by mass or less, further preferably 35% by mass or less, particularly preferably 30% by mass or less.

(BR)

The BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

As the high cis BR, for example, those commercially available from Zeon Corporation, Ube Industries, Ltd., JSR Corporation, etc. can be used. When the high cis BR is compounded, low temperature characteristics and abrasion resistance can be improved. The cis content of the high cis BR is preferably 95 mol% or more, more preferably 96 mol% or more, further preferably 97 mol% or more. Besides, the cis content of the BR is measured by the above-described measuring method.

A content of the BR when compounded in the rubber component is preferably 5% by mass or more, more preferably 10% by mass or more, further preferably 15% by mass or more, further preferably 20% by mass or more, particularly preferably 25% by mass or more, from the viewpoint of the effects of the present invention. On the other hand, the content of the SBR when compounded in the rubber component is preferably 85% by mass or less, more preferably 80% by mass or less, further preferably 75% by mass or less, further preferably 70% by mass or less, particularly preferably 65% by mass or less.

(Other rubber components)

As the rubber components according to the present embodiment, rubber components other than the above-described isoprene-based rubbers, SBRs, and BRs may be compounded. As other rubber components, a crosslinkable rubber component commonly used in the tire industry can be used, examples of which include isoprene-based rubbers such as a styrene-isoprene rubber (SIR), a styrene-isoprene-butadiene rubber (SIBR), a chloroprene rubber (CR), and an acrylonitrile-butadiene rubber (NBR), diene-based rubbers other than a SBR and a BR; and rubber components other than the diene-based rubbers such as a butyl rubber (IIR), a halogenated butyl rubber, an ethylene propylene rubber, a polynorbornene rubber, a silicone rubber, a polyethylene chloride rubber, a fluororubber (FKM), an acryl rubber (ACM), and a hydrin rubber. These other rubber components may be used alone, or two or more thereof may be used in combination. The rubber component according to the present embodiment comprises preferably 80% by mass or more, more preferably 90% by mass or more, further preferably 95% by mass or more, particularly preferably 98% by mass or more of a diene-based rubber, or may be a rubber component consisting only of a diene-based rubber. Moreover, besides the above-described rubber components, the rubber component may or may not comprise a known thermoplastic elastomer.

The total styrene amount S in the rubber component is 15.0% by mass or less, preferably 13.0% by mass or less, more preferably 11.0% by mass or less, further preferably 10.0% by mass or less, particularly preferably 9.0% by mass or less, from the viewpoint of the effects of the present invention. Moreover, the total styrene amount S in the rubber component is 1.0% by mass or more, preferably 2.0% by mass or more, more preferably 3.0% by mass or more, further preferably 4.0% by mass or more, from the viewpoint of the effects of the present invention.

<Filler>

The rubber composition according to the present embodiment preferably comprises silica as a filler, and more preferably comprises carbon black and silica. Moreover, the filler may be a filler consisting of carbon black and silica.

(Silica)

Silica is not particularly limited, and those common in the tire industry can be used, such as, for example, silica prepared by a dry process (anhydrous silica) and silica prepared by a wet process (hydrous silica). Moreover, silica made from a biomass material (for example, an amorphous silica purified from rice husks) may be used, from the viewpoint of environmental load. Among them, hydrous silica prepared by a wet process is preferable from the reason that it has many silanol groups. These silica may be used alone, or two or more thereof may be used in combination.

Silica made from a biomass material can be obtained by, for example, extracting silicate from rice husk ashes obtained by burning rice husks, using a sodium hydroxide solution, and in the same manner as for a conventional wet silica, filtering, washing with water, drying, and pulverizing precipitates of silicon dioxide generated by reacting with sulfuric acid, using the silicate.

As silica crystallizes, it is insoluble in water, and silicic acid that is a component thereof cannot be used. By controlling a burning temperature and a burning time, crystallization of silica in rice husk ashes can be suppressed (JP 2009-002594 A, Akita Prefectural University Web Journal B/2019, vol.6, p.216-222, etc.).

As the amorphous silica extracted from rice husks, those commercially available from Wilmar, etc. can be used.

The average primary particle size of silica is preferably 17 nm or more, more preferably 18 nm or more, further preferably 19 nm or more, particularly preferably 20 nm or more. When the average primary particle size of silica is within the above-described ranges, rubber molecules bound by silica are minimized and become easy to flexibly move, so that it is considered that stress can be relaxed even in a polymer molecular chain against an input, and occurrence of cracks can be suppressed. On the other hand, the average primary particle size is preferably 30 nm or less, more preferably 25 nm or less, from the viewpoint of obtaining reinforcing property. Besides, the average primary particle size of silica is measured by the above-described measuring method.

The CTAB (cetyltrimethylammonium bromide) specific surface area of silica is preferably 180 $m^2$/g or less, more preferably 170 $m^2$/g or less, further preferably 160 $m^2$/g or less, further preferably 150 $m^2$/g or less, particularly preferably 140 $m^2$/g or less, from the viewpoint of the effects of the present invention. Moreover, the CTAB specific surface area is preferably 100 $m^2$/g or more, more preferably 105 $m^2$/g or more, further preferably 110 $m^2$/g or more, further preferably 115 $m^2$/g or more, particularly preferably 120 $m^2$/g or more. Besides, the CTAB specific surface area of silica is measured by the above-described measuring method.

The nitrogen adsorption specific surface area ($N_2SA$) of silica is preferably 180 $m^2$/g or less, more preferably 170 $m^2$/g or less, further preferably 160 $m^2$/g or less, further preferably 150 $m^2$/g or less, particularly preferably 140 $m^2$/g or less, from the viewpoint of the effects of the present invention. Moreover, the $N_2SA$ is preferably 100 $m^2$/g or more, more preferably 105 $m^2$/g or more, further preferably 110 $m^2$/g or more, further preferably 115 $m^2$/g or more, particularly preferably 120 $m^2$/g or more. Besides, the $N_2SA$ of silica is measured by the above-described measuring method.

A content of silica based on 100 parts by mass of the rubber component is preferably 2 parts by mass or more, more preferably 5 parts by mass or more, further preferably 8 parts by mass or more, particularly preferably 10 parts by mass or more, from the viewpoint of obtaining reinforcing property. Moreover, it is preferably 35 parts by mass or less, more preferably 30 parts by mass or less, further preferably 25 parts by mass or less, further preferably 20 parts by mass or less, particularly preferably 15 parts by mass or less, from the viewpoint of obtaining flexibility to relax the stress.

(Carbon black)

Carbon black is not particularly limited, and, for example, those commonly used in the tire industry such as GPF, FEF, HAF, ISAF, and SAF can be used. Moreover, from the viewpoint of environmental load and from the viewpoint of reducing friction between a carbon black surface and a rubber molecular chain to suppress heat generation, a recycled carbon black (rCB) obtained from pyrolysis of a used tire may be used. These carbon black may be used alone, or two or more thereof may be used in combination.

The recycled carbon black can be obtained from a pyrolysis process of a used pneumatic tire. For example, EP3427775 A describes, with reference to "Rubber Chemistry and Technology", Vol. 85, No. 3, Pages 408 to 449 (2012), in particular, Pages 438, 440, and 442, that the recycled carbon black can be obtained by pyrolysis of an organic material at 550 to 800°C, excluding oxygen, or by vacuum pyrolysis at a relatively low temperature ([0027]). Such carbon black obtained from the pyrolysis process usually lacks a functional group on its surface, as mentioned in [0004] of JP6856781 B (A comparison of surface morphology and chemistry of pyrolytic carbon blacks with commercial carbon blacks, Powder Technology 160 (2005) 190-193).

The recycled carbon black may lack a functional group on its surface or may be treated so that its surface comprises a functional group. The treatment performed so that the surface of the recycled carbon black comprises a functional group can be implemented by a conventional method. For example, in EP3173251 A, carbon black comprising a hydroxyl and/or carboxyl group on its surface is obtained by treating carbon black obtained from a pyrolysis process with potassium permanganate under an acidic condition. Moreover, in JP6856781 B, carbon black whose surface is activated is obtained by treating carbon black obtained from a pyrolysis process with an amino acid compound comprising at least one thiol group or disulfide group. The recycled carbon black according to the present embodiment also comprises carbon black whose surface has been treated so as to comprise a functional group.

As the recycled carbon black, those commercially available from Strebl Green Carbon Pte Ltd., LDC Co., Ltd., etc. can be used.

The average primary particle size of carbon black is preferably 20 nm or more, more preferably 25 nm or more, further preferably 30 nm or more, particularly preferably 35 nm or more. When the average primary particle size of carbon black is within the above-described ranges, rubber molecules by carbon black are minimized and become easy to flexibly move, so that it is considered that the stress can be relaxed even in a polymer molecular chain against an input, and occurrence of cracks can be suppressed. On the other hand, the average primary particle size is preferably 90 nm or less, more preferably 75 nm or less, further preferably 60 nm or less, from the viewpoint of obtaining reinforcing property. Besides, the average primary particle size of carbon black is measured by the above-described measuring method.

A nitrogen adsorption specific surface area ($N_2SA$) of carbon black is preferably 90 $m^2$/g or less, more preferably 80 $m^2$/g or less, further preferably 70 $m^2$/g or less, particularly preferably 60 $m^2$/g or less, from the viewpoint of the effects of the present invention. Moreover, the $N_2SA$ is preferably 10 $m^2$/g or more, more preferably 20 $m^2$/g or more, further preferably 30 $m^2$/g or more. Besides, the $N_2SA$ of carbon black is measured by the above-described measuring method.

A content of carbon black when compounded based on 100 parts by mass of the rubber component is preferably 30 parts by mass or more, more preferably 35 parts by mass or more, further preferably 40 parts by mass or more, particularly preferably 45 parts by mass or more, from the viewpoints of obtaining reinforcing property and preventing deterioration due to ultraviolet rays. Moreover, it is preferably 90 parts by mass or less, more preferably 80 parts by mass or less, further preferably 70 parts by mass or less, further preferably 65 parts by mass or less, particularly preferably 60 parts by mass or less, from the viewpoint of obtaining flexibility to relax the stress.

A content of the recycled carbon black in a total content of carbon black is not particularly limited, but can be, for example, more than 1% by mass, more than 5% by mass, more than 10% by mass, more than 20% by mass, more than 25% by mass, or more than 30% by mass. On the other hand, it is preferably less than 95% by mass, more preferably less than 90% by mass, further preferably less than 85% by mass, from the viewpoint of reinforcing property.

(Other fillers)

As fillers other than silica and carbon black, those commonly used in the tire industry can be compounded, such as aluminum hydroxide, calcium carbonate, alumina, clay, and talc.

A ratio of a content of carbon black to a content of silica is preferably 10.0 or less, more preferably 9.0 or less, further preferably 8.0 or less, further preferably 7.0 or less, particularly preferably 6.0 or less. When the ratio of the content of carbon black to the content of silica is within the above-described ranges, the crack resistance can be further improved. On the other hand, a lower limit value of the ratio of the content of carbon black to the content of silica is not particularly limited, and can be, for example, 0.05 or more, 0.2 or more, 0.5 or more, 0.8 or more, 1.1 or more, 1.5 or more, or 2.0 or more.

A total content of fillers based on 100 parts by mass of the rubber component is preferably 40 parts by mass or more, more preferably 50 parts by mass or more, further preferably 55 parts by mass or more, particularly preferably 60 parts by mass or more. It is preferably 120 parts by mass or less, more preferably 110 parts by mass or less, further preferably 100 parts by mass or less, particularly preferably 95 parts by mass or less, from the viewpoint of the effects of the present invention.

(Silane coupling agent)

Silica is preferably used in combination with a silane coupling agent. The silane coupling agent is not particularly limited, and silane coupling agents conventionally used in combination with silica in the tire industry can be used, examples of which include, for example, mercapto-based silane coupling agents such as 3-mercaptopropyltrimethoxysilane, NXT-Z100, NXT-Z45, and NXT manufactured by Momentive Performance Materials; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl) aminopropyltriethoxysilane; glycydoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based silane coupling agents are preferable, and sulfide-based silane coupling agents are more preferable. These silane coupling agents may be used alone, or two or more thereof may be used in combination.

A content of the silane coupling agent based on 100 parts by mass of the rubber component is preferably 0.5 parts by mass or more, more preferably 1.0 part by mass or more, further preferably 2.0 parts by mass or more, particularly preferably 4.0 parts by mass or more, from the viewpoint of enhancing dispersibility of silica. Moreover, it is preferably 20 parts by mass or less, more preferably 15 parts by mass or less, further preferably 10 parts by mass or less, from the viewpoint of preventing deterioration of abrasion resistance.

A content of the silane coupling agent based on 100 parts by mass of silica is preferably 1 part by mass or more, more preferably 3 parts by mass or more, further preferably 5 parts by mass or more, particularly preferably 8 parts by mass or more, from the viewpoint of enhancing dispersibility of silica. Moreover, it is preferably 20 parts by mass or less, more preferably 18 parts by mass or less, further preferably 16 parts by mass or less, from the viewpoints of cost and processability.

(Other compounding agents)

The rubber composition according to the present embodiment can appropriately comprise compounding agents conventionally and generally used in the tire industry, for example, a softening agent, wax, stearic acid, zinc oxide, an antioxidant, a vulcanizing agent, a vulcanization accelerator, and the like, in addition to the above-described components.

Examples of the softening agent include, for example, a resin component, oil, a liquid rubber, and the like.

The resin component is not particularly limited, examples of which include a petroleum resin, a terpene-based resin, a rosin-based resin, a phenol-based resin, and the like, which are commonly used in the tire industry. These resin components may be used alone, or two or more thereof may be used in combination.

A content of the resin component when compounded based on 100 parts by mass of the rubber component is preferably 1 part by mass or more, more preferably 3 parts by mass or more, further preferably 5 parts by mass or more, from the viewpoint of making the resin component to interact with a styrene domain to make the stress to be easily relaxed. Moreover, it is preferably 60 parts by mass or less, more preferably 50 parts by mass or less, further preferably 40 parts by mass or less, particularly preferably 30 parts by mass or less, from the viewpoint of suppressing heat generation.

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, process oil having a low content of a polycyclic aromatic compound (PCA) can also be used. Examples of the process oil having a low content of a PCA include a mild extraction solution (MES), a treated distillate aromatic extract (TDAE), a heavy naphthenic oil, and the like.

A content of oil when compounded based on 100 parts by mass of the rubber component is preferably 1 part by mass or more, more preferably 3 parts by mass or more, further preferably 5 parts by mass or more, from the viewpoint of processability. Moreover, it is preferably 90 parts by mass or less, more preferably 70 parts by mass or less, further preferably 50 parts by mass or less, particularly preferably 30 parts by mass or less, from the viewpoint of abrasion resistance.

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.

A content of the liquid rubber when compounded based on 100 parts by mass of the rubber component is preferably 1 part by mass or more, more preferably 3 parts by mass or more, further preferably 5 parts by mass or more. Moreover, the content of the liquid rubber is preferably 50 parts by mass or less, more preferably 40 parts by mass or less, further preferably 20 parts by mass or less.

A content of wax when compounded based on 100 parts by mass of the rubber component is preferably 0.5 parts by mass or more, more preferably 1.0 part by mass or more, further preferably 1.5 parts by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of the antioxidant include, but not particularly limited to, for example, amine-based, quinoline-based, quinone-based, phenol-based and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1.0 part by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.5 parts by mass or more, further preferably 1.0 part by mass or more, from the viewpoint of securing a sufficient vulcanization reaction. Moreover, it is preferably 5.0 parts by mass or less, more preferably 4.0 parts by mass or less, further preferably 3.5 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable, and sulfenamide-based vulcanization accelerators are more preferable, from the viewpoint of desired effects can be obtained more appropriately.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-tert-butyl-2-benzothiazolylsulfenamide (TBBS) and N-cyclohexyl-2-benzothiazolylsulfenamide (CBS) are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably 1.0 part by mass or more, more preferably 1.5 parts by mass or more, further preferably 2.0 parts by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less, particularly preferably 5.0 parts by mass or less. When the content of the vulcanization accelerator is within the above-described ranges, breaking strength and elongation tend to be secured.

70°C tan $\delta$/70°C E* of the rubber composition according to the present embodiment is preferably 0.005 or more, more preferably 0.006 or more, further preferably 0.007 or more, particularly preferably 0.008 or more. Moreover, 70°C tan $\delta$/70°C E* is preferably 0.020 or less, more preferably 0.018 or less, further preferably 0.016 or less, particularly preferably 0.014 or less. When 70°C tan $\delta$/70°C E* is within the above-described ranges, heat generation at the time of rolling of the tire can be suppressed, and it is considered that, as a result, deterioration of the tire can be effectively suppressed.

The rubber composition according to the present embodiment preferably has a complex elastic modulus at 70°C (70°C E*) of 15 MPa or less, more preferably 14 MPa or less, further preferably 13 MPa or less, particularly preferably 12 MPa or less. Moreover, the rubber composition according to the present embodiment preferably has a 70°C E* of 5 MPa or more, more preferably 6 MPa or more, further preferably 7 MPa or more. Besides, the 70°C E* of the rubber composition is measured by the above-described measuring method.

The rubber composition according to the present embodiment has a tan $\delta$ at 70°C (70°C tan $\delta$) of preferably 0.16 or less, more preferably 0.15 or less, further preferably 0.14 or less, further preferably 0.13 or less, particularly preferably 0.12 or less. Moreover, the rubber composition according to the present embodiment has a 70°C tan $\delta$ of preferably 0.02 or more, more preferably 0.03 or more, further preferably 0.04 or more, particularly preferably 0.05 or more. Besides, the 70°C tan δ of the rubber composition is measured by the above-described measuring method.

Besides, the 70°C tan δ and 70°C E* of the rubber composition according to the present embodiment can be appropriately adjusted depending on types and compounding amounts of rubber components, fillers, softening agents, etc. which will be described later.

The rubber composition according to the present embodiment can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature at 150 to 170°C for 3 to 10 minutes, and in the final kneading step, a method of kneading at 70 to 110°C for 1 to 5 minutes. A vulcanization condition is not particularly limited. Examples of vulcanization include, for example, a method of vulcanizing at 150 to 200°C for 10 to 30 minutes.

The tire according to the present embodiment comprising the clinch part of the above-described rubber composition can be produced by a usual method. That is, the tire can be produced by extruding an unvulcanized rubber composition compounded from the rubber component and other components as necessary into a shape of the clinch part, attaching it together with other tire members on a tire forming machine, and molding them by a usual method to form an unvulcanized tire, followed by heating and pressurizing this unvulcanized tire in a vulcanizing machine. A vulcanization condition is not particularly limited. Examples of vulcanization include, for example, a method of vulcanizing at 150 to 200°C for 10 to 30 minutes.

<Application>

The tire according to the present embodiment can be appropriately used as a tire for a passenger car, a tire for a truck/bus, a tire for a two-wheeled vehicle, or a racing tire. Among them, it is preferably used as a tire for a passenger car. Besides, the tire for a passenger car is a tire on the premise that it is mounted on a car running on four wheels and refers to one having a maximum load capacity of 1000 kg or less. Moreover, the tire according to the present embodiment can be used as an all-season tire, a summer tire, or a winter tire such as a studless tire.

EXAMPLE

Hereinafter, the present invention will be described based on Examples, though the present invention is not limited to these Examples.

Various chemicals used in Examples and Comparative examples are collectively shown below.

NR: TSR20
IR: Nipol (Registered Trademark) IR2200 manufactured by Zeon Corporation
SBR1: SBR1502 manufactured by JSR Corporation (E-SBR, styrene content: 23.5% by mass)
SBR2: HPR840 manufactured by JSR Corporation (S-SBR, styrene content: 10% by mass)
SBR3: a hydrogenated SBR produced according to Production example 1 below (hydrogenation rate: 80 mol%, styrene content: 35% by mass)
BR: UBEPOL BR (Registered Trademark) 150B manufactured by Ube Industries, Ltd. (cis content: 97 mol%)
Carbon black 1: Show Black N330 manufactured by Cabot Japan K.K. ($N_2SA$: 75 $m^2$/g, average primary particle size: 30 nm)
Carbon black 2: Seast SO manufactured by Tokai Carbon Co., Ltd. (FEF, N550, $N_2SA$: 42 $m^2$/g, average primary particle size: 43 nm)
black 3: SS550 manufactured by Strebl Green Carbon Pte Ltd. (carbon black obtained from a pyrolysis process of a tire)
Silica 1: ULTRASIL VN3 manufactured by Evonik Degussa GmbH ($N_2SA$: 175 $m^2$/g, CTAB adsorption specific surface area: 165 $m^2$/g, average primary particle size: 18 nm)
Silica 2: ZEOSIL 115GR manufactured by Rhodia Japan Ltd. ($N_2SA$: 115 $m^2$/g, CTAB adsorption specific surface area: 115 $m^2$/g, average primary particle size: 20 nm)

Silica 3: K185 manufactured by Wilmar International Ltd. (amorphous silica purified from rice husks)
Silane coupling agent: Si266 manufactured by Evonik Degussa GmbH (bis(3-triethoxysilylpropyl)disulfide)
Oil: VivaTec 400 manufactured by H&R Group (TDAE oil)
Wax: OZOACE 0355 manufactured by Nippon Seiro Co., Ltd.
Antioxidant 1: Nocrac 6C manufactured by Ouchi Shinko Chemical Industry Co., Ltd. (N-(1,3-dimethylbutyl)-N'-phenyl-p-phenylenediamine)
Antioxidant 2: Nocrac RD manufactured by Ouchi Shinko Chemical Industry Co., Ltd. (poly(2,2,4-trimethyl-1,2-dihydroquinoline))
Zinc oxide: Zinc oxide No. 1 manufactured by Mitsui Mining & Smelting Co., Ltd.
Stearic acid: Bead stearic acid "CAMELLIA" manufactured by NOF CORPORATION
Sulfur: Seimi OT manufactured by Nippon Kanryu Industry Co., Ltd. (10% oil-containing insoluble sulfur)
Vulcanization accelerator: Nocceler CZ manufactured by Ouchi Shinko Chemical Industry Co., Ltd. (N-cyclohexyl-2-benzothiazolylsulfenamide (CBS))

(Production example 1: Production of hydrogenated SBR)

To a heat-resistant reaction vessel sufficiently subjected to nitrogen purge, 2000 mL of n-hexane, 60 g of styrene, 140 g of 1,3-butadiene, 0.93 g of TMEDA, and 0.45 mmol of n-butyllithium were added, and the mixture was stirred at 50°C for 5 hours to perform a polymerization reaction. Next, the mixture was stirred for 20 minutes while supplying a hydrogen gas at a pressure of 0.4 MPa-Gauge and reacted with an unreacted polymer terminal lithium into lithium hydride. Hydrogenation was performed using a catalyst mainly composed of titanocenedichloride with a hydrogen gas-supplying pressure at 0.7 MPa-Gauge and a reaction temperature titanosendichloride at 90°C. When hydrogen absorption reached an integrated amount of an intended hydrogenation rate, the reaction temperature was set to a normal temperature and the hydrogen pressure is returned to a normal pressure to extract the hydrogen gas from the reaction vessel, and the reaction solution was charged and stirred in water to remove the solvent by steam stripping, thereby obtaining a hydrogenated SBR.

(Examples and Comparative examples)

According to the compounding formulations shown in Tables 1-1 and 1-2, using a 1.7 L closed Banbury mixer, all chemicals other than sulfur and vulcanization accelerators were kneaded until the temperature reaching a discharge temperature of 170°C for 5 minutes to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was extruded into a shape of a clinch part with an extruder equipped with a mouthpiece having a predetermined shape and attached together with other tire members, forming an unvulcanized tire, and the unvulcanized tire was press-vulcanized under a condition of 170°C for 12 minutes to produce each test tire.
The obtained test tires were evaluated as follows. The evaluation results are shown in Tables 1-1 and 1-2.

<Measurement of 70°C tan $\delta$ and 70°C E*>

Each rubber specimen after vulcanization was cut out with 20 mm in length $\times$ 4 mm in width $\times$ 1 mm in thickness from a clinch part of each test tire so that a tire width direction (a normal direction of a surface of the clinch part) becomes on a long side and a tire radial direction becomes a thickness direction. For each rubber specimen, using EPLEXOR series manufactured by gabo Systemtechnik GmbH, a tan $\delta$ and a complex elastic modulus (E*) were measured under a condition of a temperature at 70°C, a frequency of 10 Hz, and a dynamic strain amplitude of 1%. The results are shown in Tables 1-1 and 1-2.

<Crack resistance>

Each test tire was filled with 250 kPa of air and subjected to heat deterioration in an oven at 80°C for 1 week. Then, the tire was mounted to all wheels of a car with a displacement of 2000 cc and used for an actual running for one month (running distance: 10000 km). For each tire after running, lengths of cracks were measured on the surface of the clinch part in a range of 50 mm $\times$ 20 mm to calculate a total length of the measured lengths. Then, crack resistance was indicated as an index by the following equation. The results show that the larger the index was, the better the crack resistance was.

(Crack resistance index) = (Total crack length of Comparative example 5)/(Total crack length of each test tire) $\times$ 100

Table 1-1

| | Example | | | | | | | | |
|---|---|---|---|---|---|---|---|---|---|
| | 1 | 1-2 | 2 | 2-2 | 2-3 | 3 | 4 | 5 | 6 |
| Compounding amount (part by mass) | | | | | | | | | |
| NR | 20 | 40 | 20 | 20 | 40 | 20 | 20 | - | 20 |
| IR | - | - | - | - | - | - | - | 20 | - |
| SBR1 | 20 | 20 | 20 | 20 | 20 | 20 | 20 | 20 | 20 |
| SBR2 | - | - | - | - | - | - | - | - | - |
| SBR3 | - | - | - | - | - | - | - | - | - |
| BR | 60 | 40 | 60 | 60 | 40 | 60 | 60 | 60 | 60 |
| Carbon black 1 | 65 | 65 | 65 | 55 | 20 | 55 | - | - | - |
| Carbon black 2 | - | - | - | - | - | - | 55 | 55 | 55 |
| Carbon black 3 | - | - | - | - | 35 | - | - | - | - |
| Silica 1 | - | - | - | - | - | 10 | 10 | 10 | - |
| Silica 2 | - | - | - | - | - | - | - | - | 10 |
| Silica 3 | - | - | - | - | - | - | - | - | - |
| Silane coupling agent | - | - | - | - | - | 0.6 | 0.6 | 0.6 | 0.8 |
| Oil | 10 | 10 | 10 | 10 | 10 | 6.0 | 3.0 | 3.0 | 3.0 |
| Wax | 3.0 | 3.0 | 3.0 | 3.0 | 3.0 | 3.0 | 3.0 | 3.0 | 3.0 |
| Antioxidant 1 | 2.5 | 2.5 | 2.5 | 2.5 | 2.5 | 2.5 | 2.5 | 2.5 | 2.5 |
| Antioxidant 2 | 1.0 | 1.0 | 1.0 | 1.0 | 1.0 | 1.0 | 1.0 | 1.0 | 1.0 |
| Zinc oxide | 2.0 | 2.0 | 2.0 | 2.0 | 2.0 | 2.0 | 2.0 | 2.0 | 2.0 |
| Stearic acid | 2.5 | 2.5 | 2.5 | 2.5 | 2.5 | 2.5 | 2.5 | 2.5 | 2.5 |
| Sulfur | 3.5 | 3.5 | 3.5 | 3.5 | 3.5 | 3.5 | 3.5 | 3.5 | 3.5 |
| Vulcanization accelerator | 2.5 | 2.5 | 2.5 | 2.5 | 2.5 | 2.5 | 2.5 | 2.5 | 2.5 |
| S (% by mass) | 4.7 | 4.7 | 4.7 | 4.7 | 4.7 | 4.7 | 4.7 | 4.7 | 4.7 |
| T (mm) | 5.0 | 5.0 | 5.0 | 5.0 | 5.0 | 5.0 | 5.0 | 5.0 | 5.0 |
| S/T | 0.94 | 0.94 | 0.94 | 0.94 | 0.94 | 0.94 | 0.94 | 0.94 | 0.94 |
| G (kg) | 9.1 | 9.0 | 7.0 | 7.0 | 7.0 | 7.0 | 7.1 | 7.0 | 7.0 |
| $W_L$ (kg) | 534 | 534 | 534 | 534 | 534 | 534 | 534 | 534 | 534 |
| $G/W_L$ | 0.0170 | 0.0169 | 0.0131 | 0.0129 | 0.0129 | 0.0131 | 0.0133 | 0.0131 | 0.0131 |
| 70°C tan $\delta$ | 0.14 | 0.14 | 0.14 | 0.12 | 0.11 | 0.12 | 0.09 | 0.09 | 0.10 |
| 70°C E* (MPa) | 8.8 | 9.0 | 8.8 | 7.7 | 7.1 | 8.8 | 7.5 | 7.7 | 7.9 |
| 70°C tan $\delta$/70°C E* | 0.016 | 0.016 | 0.016 | 0.016 | 0.015 | 0.014 | 0.012 | 0.012 | 0.013 |
| Crack resistance index | 105 | 106 | 110 | 111 | 112 | 115 | 120 | 125 | 118 |
| 7 | 8 | 9 | 10 | 11 | 12 | 13 | 14 | 15 | |
| Compounding amount (part by mass) | | | | | | | | | |
| NR | 20 | 20 | 20 | 30 | 20 | 20 | 20 | 20 | 20 |
| IR | - | - | - | - | - | - | - | - | - |

(continued)

| | 7 | 8 | 9 | 10 | 11 | 12 | 13 | 14 | 15 |
|---|---|---|---|---|---|---|---|---|---|
| SBR1 | - | - | 20 | 30 | 20 | 20 | 20 | 20 | 20 |
| SBR2 | 20 | - | - | - | - | - | - | - | - |
| SBR3 | - | 20 | - | - | - | - | - | - | - |
| BR | 60 | 60 | 60 | 40 | 60 | 60 | 60 | 60 | 60 |
| Carbon black 1 | - | - | - | - | - | - | - | - | - |
| Carbon black 2 | 55 | 55 | 45 | 55 | 55 | 55 | 55 | 30 | 10 |
| Carbon black 3 | - | - | - | - | - | - | - | 20 | 40 |
| Silica 1 | 10 | 10 | - | - | - | - | - | - | - |
| Silica 2 | - | - | 20 | 10 | 10 | 10 | - | 10 | 10 |
| Silica 3 | - | - | - | - | - | - | 10 | - | - |
| Silane coupling agent | 0.6 | 0.6 | 1.6 | 0.8 | 0.8 | 0.8 | 0.8 | 0.8 | 0.8 |
| Oil | 3.0 | 3.0 | 3.0 | 3.0 | 3.0 | 3.0 | 3.0 | 3.0 | 3.0 |
| Wax | 3.0 | 3.0 | 3.0 | 3.0 | 3.0 | 3.0 | 3.0 | 3.0 | 3.0 |
| Antioxidant 1 | 2.5 | 2.5 | 2.5 | 2.5 | 2.5 | 2.5 | 2.5 | 2.5 | 2.5 |
| Antioxidant 2 | 1.0 | 1.0 | 1.0 | 1.0 | 1.0 | 1.0 | 1.0 | 1.0 | 1.0 |
| Zinc oxide | 2.0 | 2.0 | 2.0 | 2.0 | 2.0 | 2.0 | 2.0 | 2.0 | 2.0 |
| Stearic acid | 2.5 | 2.5 | 2.5 | 2.5 | 2.5 | 2.5 | 2.5 | 2.5 | 2.5 |
| Sulfur | 3.5 | 3.5 | 3.5 | 3.5 | 3.5 | 3.5 | 3.5 | 3.5 | 3.5 |
| Vulcanization accelerator | 2.5 | 2.5 | 2.5 | 2.5 | 2.5 | 2.5 | 2.5 | 2.5 | 2.5 |
| S (% by mass) | 2.0 | 7.0 | 4.7 | 7.1 | 4.7 | 4.7 | 4.7 | 4.7 | 4.7 |
| T (mm) | 5.0 | 5.0 | 5.0 | 5.0 | 3.0 | 5.0 | 5.0 | 5.0 | 5.0 |
| S/T | 0.40 | 1.40 | 0.94 | 1.41 | 1.57 | 0.94 | 0.94 | 0.94 | 0.94 |
| G (kg) | 6.9 | 7.0 | 7.0 | 7.1 | 6.9 | 6.0 | 6.0 | 6.1 | 6.0 |
| $W_L$ (kg) | 534 | 534 | 534 | 534 | 534 | 534 | 534 | 534 | 534 |
| $G/W_L$ | 0.0129 | 0.0131 | 0.0131 | 0.0133 | 0.0129 | 0.0112 | 0.0112 | 0.0114 | 0.0112 |
| 70°C tan $\delta$ | 0.07 | 0.07 | 0.11 | 0.11 | 0.10 | 0.10 | 0.10 | 0.09 | 0.08 |
| 70°C E* (MPa) | 6.5 | 8.8 | 7.9 | 8.3 | 7.9 | 7.9 | 7.9 | 7.5 | 7.1 |
| 70°C tan $\delta$/70°C E* | 0.011 | 0.008 | 0.014 | 0.013 | 0.013 | 0.013 | 0.013 | 0.012 | 0.011 |
| Crack resistance index | 125 | 140 | 115 | 118 | 115 | 125 | 126 | 128 | 130 |

Table 1-2

| | Comparative example | | | | |
|---|---|---|---|---|---|
| | 1 | 2 | 3 | 4 | 5 |
| Compounding amount (part by mass) | | | | | |
| NR | 40 | - | 38 | - | 15 |
| IR | - | - | - | - | - |
| SBR1 | - | 40 | 2 | 80 | 75 |
| SBR2 | - | - | - | - | - |
| SBR3 | - | - | - | - | - |
| BR | 60 | 60 | 60 | 20 | 10 |
| Carbon black 1 | 65 | 65 | 65 | 65 | 65 |

(continued)

| | Comparative example | | | | |
|---|---|---|---|---|---|
| | 1 | 2 | 3 | 4 | 5 |
| Carbon black 2 | - | - | - | - | - |
| Silica 1 | - | - | - | - | - |
| Silica 2 | - | - | - | - | - |
| Silane coupling agent | - | - | - | - | - |
| Oil | 10 | 10 | 10 | 10 | 10 |
| Wax | 3.0 | 3.0 | 3.0 | 3.0 | 3.0 |
| Antioxidant 1 | 2.5 | 2.5 | 2.5 | 2.5 | 2.5 |
| Antioxidant 2 | 1.0 | 1.0 | 1.0 | 1.0 | 1.0 |
| Zinc oxide | 2.0 | 2.0 | 2.0 | 2.0 | 2.0 |
| Stearic acid | 2.5 | 2.5 | 2.5 | 2.5 | 2.5 |
| Sulfur | 3.5 | 3.5 | 3.5 | 3.5 | 3.5 |
| Vulcanization accelerator | 2.5 | 2.5 | 2.5 | 2.5 | 2.5 |
| S (% by mass) | 0 | 9.4 | 0.47 | 18.8 | 17.6 |
| T (mm) | 5.0 | 5.0 | 5.0 | 5.0 | 5.0 |
| S/T | 0 | 1.88 | 0.09 | 3.76 | 3.52 |
| G (kg) | 9.0 | 8.9 | 9.0 | 8.9 | 9.0 |
| $W_L$ (kg) | 534 | 534 | 534 | 534 | 534 |
| $G/W_L$ | 0.0169 | 0.0167 | 0.0169 | 0.0167 | 0.0169 |
| 70°C tan $\delta$ | 0.13 | 0.14 | 0.13 | 0.13 | 0.14 |
| 70°C E* (MPa) | 8.0 | 9.4 | 8.2 | 8.9 | 9.1 |
| 70°C tan $\delta$/70°C E* | 0.016 | 0.015 | 0.016 | 0.015 | 0.015 |
| Crack resistance index | 90 | 95 | 91 | 95 | 100 |

From the results in Tables 1-1 and 1-2, it can be found that the tire of the present invention, in which the total styrene amount in the rubber component of the clinch part and the maximum thickness of the clinch part have a predetermined relationship, has improved crack resistance of the clinch part.

REFERENCE SIGNS LIST

1. Tire
2. Tread part
3. Sidewall part
4. Clinch part
5. Bead core
6. Bead apex
7. Breaker
8. Rim

**Claims**

1. A tire comprising a clinch part,

   wherein the clinch part is composed of a rubber composition comprising a rubber component and a filler,
   wherein the rubber component comprises an isoprene-based rubber and a styrene-butadiene rubber, and
   wherein, when a total styrene amount in the rubber component is defined as S (% by mass) and a maximum thickness of the clinch part is defined as T (mm), S is 1.0 to 15.0% by mass, and S/T is 0.10 or more.

**2.** The tire of claim 1, wherein, when a tire weight is defined as G (kg) and a maximum load capacity of the tire is defined as $W_L$ (kg), $G/W_L$ is 0.0150 or less.

**3.** The tire of claim 1 or 2, wherein the rubber composition comprises 5 to 35 parts by mass of silica having an average primary particle size of 18 nm or more based on 100 parts by mass of the rubber component,
wherein the average primary particle size of silica is calculated by observing silica with a transmission or scanning electron microscope, measuring 400 or more primary particles of silica observed in the field of view, and averaging them.

**4.** The tire of any one of claims 1 to 3, wherein the rubber composition comprises 35 parts by mass or more of carbon black having an average primary particle size of 40 nm or more based on 100 parts by mass of the rubber component,
wherein the average primary particle size of carbon black is calculated by observing carbon black with a transmission or scanning electron microscope, measuring 400 or more primary particles of carbon black observed in the field of view, and averaging them.

**5.** The tire of any one of claims 1 to 4, wherein the rubber component comprises 10 to 50% by mass of an isoprene-based rubber.

**6.** The tire of any one of claims 1 to 5, wherein the rubber component comprises 5 to 40% by mass of a styrene-butadiene rubber.

**7.** The tire of any one of claims 1 to 6, wherein, when a tan $\delta$ at 70°C of the rubber composition is defined as 70°C tan $\delta$ and a complex elastic modulus at 70°C of the rubber composition is defined as 70°C E* (MPa), 70°C tan $\delta$/70°C E* is 0.005 to 0.020.

**8.** The tire of any one of claims 1 to 7, wherein the filler comprises a recycled carbon black.

**9.** The tire of any one of claims 1 to 8, wherein the filler comprises silica made from a biomass material.

**Patentansprüche**

**1.** Reifen, umfassend einen Wulststreifen-Teil,

wobei der Wulststreifen-Teil mit einer Kautschukzusammensetzung aufgebaut ist, die eine Kautschukkomponente und einen Füllstoff umfasst,
wobei die Kautschukkomponente einen Isopren-basierten Kautschuk und einen Styrol-Butadien-Kautschuk umfasst, und
wobei, wenn eine Gesamtstyrolmenge in der Kautschukkomponente als S (Massen-%) definiert ist, und eine maximale Dicke des Wulststreifen-Teils als T (mm) definiert ist, S 1,0 bis 15,0 Massen-% beträgt, und S/T 0,10 oder mehr beträgt.

**2.** Reifen nach Anspruch 1, wobei, wenn ein Reifengewicht als G (kg) definiert ist und eine maximale Tragfähigkeit des Reifens als $W_L$ (kg) definiert ist, $G/W_L$ 0,0150 oder weniger beträgt.

**3.** Reifen nach Anspruch 1 oder 2, wobei die Kautschukzusammensetzung 5 bis 35 Massenteile an Siliziumdioxid, das eine mittlere Primärpartikelgröße von 18 nm oder mehr aufweist, bezogen auf 100 Massenteile der Kautschukkomponente umfasst,
wobei die mittlere Primärpartikelgröße von Siliziumdioxid berechnet ist durch Betrachten von Siliziumdioxid mit einem Transmissions- oder Rasterelektronenmikroskop, Messen von 400 oder mehr im Sichtfeld betrachteten Primärpartikeln von Siliziumdioxid, und Mitteln derselben.

**4.** Reifen nach einem der Ansprüche 1 bis 3, wobei die Kautschukzusammensetzung 35 Massenteile oder mehr an Ruß, der eine mittlere Primärpartikelgröße von 40 nm oder mehr aufweist, bezogen auf 100 Massenteile der Kautschukkomponente umfasst,
wobei die mittlere Primärpartikelgröße von Ruß berechnet ist durch Betrachten von Ruß mit einem Transmissions- oder Rasterelektronenmikroskop, Messen von 400 oder mehr im Sichtfeld betrachteten Primärpartikeln von Ruß, und Mitteln derselben.

**5.** Reifen nach einem der Ansprüche 1 bis 4, wobei die Kautschukkomponente 10 bis 50 Massen-% eines Isopren-basierten Kautschuks umfasst.

**6.** Reifen nach einem der Ansprüche 1 bis 5, wobei die Kautschukkomponente 5 bis 40 Massen-% eines Styrol-Butadien-Kautschuks umfasst.

**7.** Reifen nach einem der Ansprüche 1 bis 6, wobei, wenn ein tan $\delta$ bei 70°C der Kautschukzusammensetzung als 70°C tan $\delta$ definiert ist und ein komplexer Elastizitätsmodul bei 70°C der Kautschukzusammensetzung als 70°C E* (MPa) definiert ist, 70°C tan $\delta$/70°C E* 0,005 bis 0,020 beträgt.

**8.** Reifen nach einem der Ansprüche 1 bis 7, wobei der Füllstoff einen rezyklierten Ruß umfasst.

**9.** Reifen nach einem der Ansprüche 1 bis 8, wobei der Füllstoff Siliziumdioxid umfasst, das aus einem Biomassenmaterial hergestellt ist.

**Revendications**

**1.** Pneumatique comprenant une partie talon,

dans lequel la partie talon est composée d'une composition de caoutchouc comprenant un composant de caoutchouc et une charge,
dans lequel le composant de caoutchouc comprend un caoutchouc à base d'isoprène et un caoutchouc de styrène-butadiène et
dans lequel, lorsqu'une quantité de styrène totale dans le composant de caoutchouc est définie comme S (% en masse) et une épaisseur maximum de la partie talon est définie comme T (mm), S est de 1,0 à 15,0 % en masse et S/T est de 0,10 ou plus.

**2.** Pneumatique selon la revendication 1, dans lequel, lorsqu'un poids de pneumatique est défini comme G (kg) et une capacité de charge maximum du pneumatique est définie comme $W_L$ (kg), $G/W_L$ est de 0,0150 ou moins.

**3.** Pneumatique selon la revendication 1 ou 2, dans lequel la composition de caoutchouc comprend 5 à 35 parties en masse de silice ayant une taille de particule primaire moyenne de 18 nm ou plus sur la base de 100 parties en masse du composant de caoutchouc,
dans lequel la taille de particule primaire moyenne de la silice est calculée en observant la silice avec un microscope électronique à transmission ou à scannage, en mesurant 400 ou plus particules primaires de la silice observées dans le champ de vision et en les moyennant.

**4.** Pneumatique selon l'une quelconque des revendications 1 à 3, dans lequel la composition de caoutchouc comprend 35 parties en masse ou plus de noir de charbon ayant une taille de particule primaire moyenne de 40 nm ou plus sur la base de 100 parties en masse du composant de caoutchouc, dans lequel la taille de particule primaire moyenne du noir de charbon est calculée en observant le noir de charbon avec un microscope électronique à transmission ou à scannage, mesurant 400 ou plus particules primaires de noir de charbon observées dans le champ de vision et en les moyennant.

**5.** Pneumatique selon l'une quelconque des revendications 1 à 4, dans lequel le composant de caoutchouc comprend 10 à 50 % en masse d'un caoutchouc à base d'isoprène.

**6.** Pneumatique selon l'une quelconque es revendications 1 à 5, dans lequel le composant de caoutchouc comprend 5 à 40 % en masse d'un caoutchouc de styrène-butadiène.

**7.** Pneumatique selon l'une quelconque des revendications 1 à 6, dans lequel, lorqu'une tan $\delta$ à 70 °C de la composition de caoutchouc est définie comme 70 °C tan $\delta$ et un module élastique complexe à 70 °C de la composition de caoutchouc est défini comme 70 °C E* (MPa), 70 °C tan $\delta$ / 70 °C E* est de 0,005 à 0,020.

**8.** Pneumatique selon l'une quelconque des revendications 1 à 7, dans lequel la charge comprend un noir de charbon recyclé.

9. Pneumatique selon l'une quelconque des revendications 1 à 8, dans lequel la charge comprend de la silice préparée à partir d'un matériau de biomasse.

# FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020058150 A
- JP 2009002594 A
- EP 3427775 A
- JP 6856781 B
- EP 3173251 A

**Non-patent literature cited in the description**

- *Akita Prefectural University Web Journal B*, 2019, vol. 6, 216-222
- *Rubber Chemistry and Technology*, 2012, vol. 85 (3), 408-449
- A comparison of surface morphology and chemistry of pyrolytic carbon blacks with commercial carbon blacks. *Powder Technology*, 2005, vol. 160, 190-193